# DEMANDE DE BREVET EUROPEEN

(11) **EP 2 527 663 A2**
(43) Date de publication de la demande: **28.11.2012**
(21) Numéro de dépôt: 12169593.6
(22) Date de dépôt: 25.05.2012
(51) Int. Cl.: F16B 5/12, B62D 25/18

(54) **Boîtier support pour des moyens de fixation**

(30) Priorité: 27.05.2011 FR 1154664
(71) Demandeur: EUROSTYLE SYSTEMS, 36000 Châteauroux (FR)
(72) Inventeur: Chausset, François, 36250 SAINT MAUR (FR); Pajot, Gilles, 36330 ARTHON (FR)
(74) Mandataire: Berger, Helmut

(57) **Abrégé**

L'invention concerne un boîtier support (5) pour des moyens adaptés pour pouvoir fixer une pièce de forme (F) sur la surface d'un élément, notamment d'un élément de la carrosserie (C) d'un véhicule, les moyens comprenant une tige de réception (3) adaptée pour être disposée de manière proéminente sur la surface de l'élément et une agrafe (4) adaptée pour pouvoir être placée dans le boîtier support (5) et pour coopérer avec la tige de réception.

Le boîtier support (5) est formé de matière, notamment par injection, avec la pièce de forme et comprend des butées de positionnement sous la forme d'arêtes obtenues par la mise en place de deux ouvertures latérales opposées formées dans la paroi périphérique du boîtier support (5).

## Description

La présente invention concerne un boîtier support pour des moyens adaptés pour pouvoir fixer une pièce de forme sur la surface d'un élément, notamment d'un élément de la carrosserie d'un véhicule.

Certains véhicules automobiles sont équipés de garnitures extérieures, généralement appelées des élargisseurs d'ailes, réalisées en matière plastique. Parmi ces véhicules, les uns sont équipés d'élargisseurs d'ailes déjà au départ de l'usine alors que d'autres en sont équipés au cours de leur utilisation. Dans un cas comme dans l'autre, il est judicieux de prévoir un remplacement facile des élargisseurs d'ailes par utilisation de moyens de fixation fonctionnant selon le principe de clipsage ou encliquetage.

Les élargisseurs d'ailes sont fixés sur les ailes avant et arrière au bord des découpes de passage de roues. Pour les maintenir en place, on utilise dans la plupart des cas, lorsque le volume disponible le permet, des agrafes plastiques à clipser dans des trous percés près du bord de l'aile. Dans les cas où le perçage de trous est impossible, on a recours à des rivets métalliques soudés sur le bord de l'aile et à des agrafes plastiques montées sur les élargisseurs d'aile et clipsées sur les rivets.

Les agrafes plastiques ayant une flexibilité limitée en raison de la rigidité nécessaire de la matière plastique en laquelle les agrafes sont réalisées pour pouvoir assurer une liaison fiable entre l'aile et l'élargisseur, on rencontre souvent des problèmes de montage en raison des dispersions de fabrication des agrafes et de la précision avec laquelle aussi bien les rivets ou les trous que les agrafes peuvent être mis en place respectivement sur l'aile et sur l'élargisseur. Une autre difficulté à prendre en compte est la dilatation des pièces les unes par rapport aux autres.

Cependant, la position des rivets ou tout autre type de tiges de réception et la position des agrafes les uns par rapport aux autres sont primordiales pour assurer une fixation fiable des élargisseurs d'ailes sur les ailes ou, d'une manière plus générale, de toute pièce de forme sur un élément tel que, par exemple, un élément de carrosserie.

Aussi, les agrafes sont insérées dans des boîtiers support comportant des butées de positionnement par lesquelles les agrafes sont maintenues dans une position précise, à l'intérieur du boîtier support, par rapport à la pièce de forme. Compte tenu de la position en retrait des butées à l'intérieur des boîtiers, ces derniers ne peuvent être réalisés que séparément des pièces de forme et doivent être fixés sur le dos de la pièce de forme par clipsage, collage ou soudure, ce qui représente un impact en masse et en assemblage non négligeable.

Le but de l'invention est donc de proposer un boîtier support pour des moyens de fixation adaptés pour pouvoir fixer une pièce de forme sur la surface d'un élément tel que, par exemple, un élément de la carrosserie d'un véhicule de façon à pallier les difficultés décrites plus haut.

Le but de l'invention est atteint avec un boîtier pour des moyens adaptés pour pouvoir fixer une pièce de forme sur la surface d'un élément, notamment d'un élément de la carrosserie d'un véhicule, les moyens comprenant une tige de réception adaptée pour être disposée de manière proéminente sur la surface de l'élément et une agrafe adaptée pour pouvoir être placée dans le boîtier support et pour coopérer avec la tige de réception.

Selon l'invention, le boîtier support est formé de matière, notamment par injection, avec la pièce de forme et comprend des butées de positionnement sous la forme d'arêtes obtenues par deux ouvertures latérales opposées formées dans la paroi périphérique du boîtier support.

Comme il sera expliqué à l'aide de l'exemple de réalisation représenté sur les dessins annexés, les agrafes sont placées entre des butées de positionnement qui ne sont plus constituées par des ergots formés en proéminence sur la surface intérieure de la paroi périphérique du boîtier support mais par des arêtes qui, bien que situées à l'intérieur du boîtier support, peuvent être formées à partir de l'extérieur du boîtier support : elles sont formées par un moule d'injection comprenant une languette mobile disposée de façon à sortir de l'intérieur du boîtier support avant l'ouverture du moule et le démoulage de la pièce de forme, et deux plans de fermeture parallèles entre eux et disposés transversalement par rapport à un plan dans lequel la languette mobile évolue. Grâce à cette disposition de l'invention, le boîtier support peut être réalisé en une seule pièce avec la pièce de forme.

La présente invention concerne également un mode de réalisation de l'invention selon lequel les tiges de réception sont des rivets.

La présente invention concerne en outre une pièce de forme avec un boîtier support tel que décrit ci-avant, un moule pour réaliser un tel boîtier support et un véhicule automobile avec un élément de carrosserie et une pièce de forme comportant un tel boîtier support. Le moule d'injection comprend une languette mobile disposée de façon à sortir de l'intérieur du boîtier support avant l'ouverture du moule et le démoulage de la pièce de forme, et deux plans de fermeture parallèles entre eux et disposées transversalement par rapport au plan dans lequel la languette mobile évolue.

D'autres caractéristiques et avantages de la présente invention ressortiront de la description d'un exemple de réalisation. La description est faite en référence aux dessins annexés dont
la figure 1 représente une vue sur une partie d'une aile d'un véhicule automobile pourvue d'un élargisseur d'aile ;
la figure 2 représente l'aile et l'élargisseur d'aile de la figure 1 en une coupe transversale,
la figure 3 représente une vue détaillée sur l'intérieur d'un boîtier support réalisé sans la présente invention,
la figure 4 représente la face intérieure de l'élément de forme visible sur la figure 1, l'élément de forme étant pourvu de sept boîtiers support selon l'invention,
la figure 5 représente une vue détaillée sur la face extérieure d'un boîtier support réalisé selon l'invention et portant une agrafe,
la figure 6 représente le boîtier support de la figure 5 sans l'agrafe et
la figure 7 représente une vue sur l'intérieur du boîtier support des figures 5 et 6.

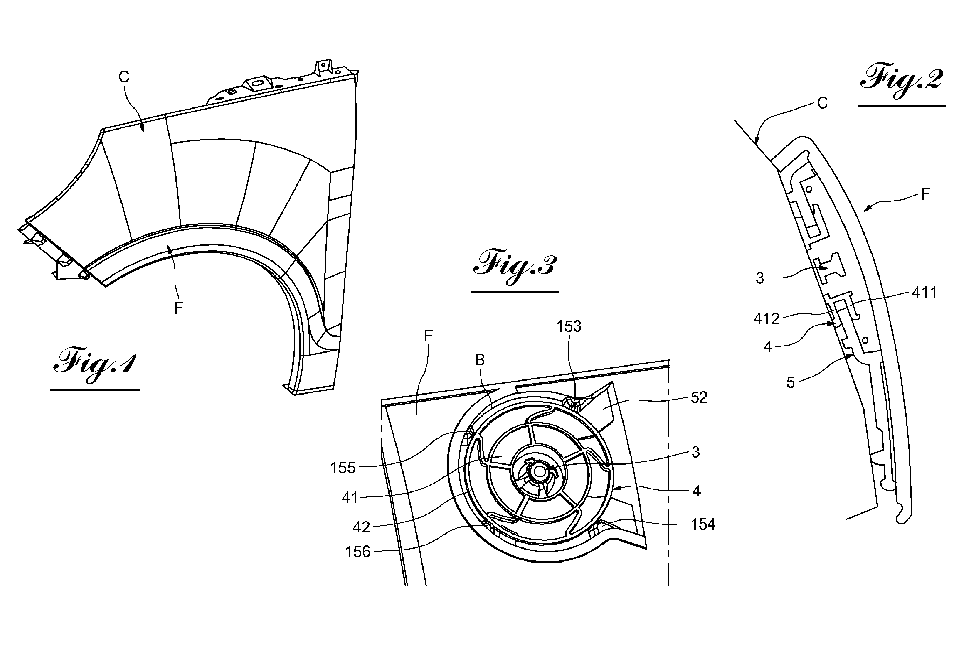

Les figures 1 et 2 représentent, respectivement en une vue de face et en une coupe transversale, une partie d'une aile d'un véhicule automobile constitutif d'un élément C sur lequel une pièce de forme F doit être fixée. La pièce de forme F est constituée ici par un élargisseur d'aile. On voit plus particulièrement sur la figure 2 la position d'un rivet 3 formant une tige de réception sur laquelle est clipsée une agrafe 4 qui est elle-même tenue dans un boîtier 5 solidaire de la pièce de forme F.

La figure 3 représente le côté intérieur d'un boîtier support B réalisé avant l'invention et avec une agrafe 4 mise en place. Cette figure montre plus particulièrement que l'agrafe 4 est conçue de façon à présenter elle-même une flexibilité limitée entre une zone périphérique servant au positionnement de l'agrafe à l'intérieur du boîtier support et une zone centrale coopérant avec les tiges de réception. L'agrafe 4 comprend une zone centrale 41, également appelée zone de clipsage, qui est agencée pour coopérer avec le rivet 3, et une zone 42 sous la forme d'une collerette élastiquement déformable et agencée pour assurer une mise en place précise de l'agrafe dans le boîtier support B. La zone centrale 41 de l'agrafe 4 est formée par deux disques concentriques 411, 412 axialement espacés l'un de l'autre (voir figure 2).

L'agrafe 4 est maintenue en place dans une position précise par des butées de positionnement 153 à 156 formées par des ergots en saillie sur la face intérieure de la paroi périphérique du boîtier support B.

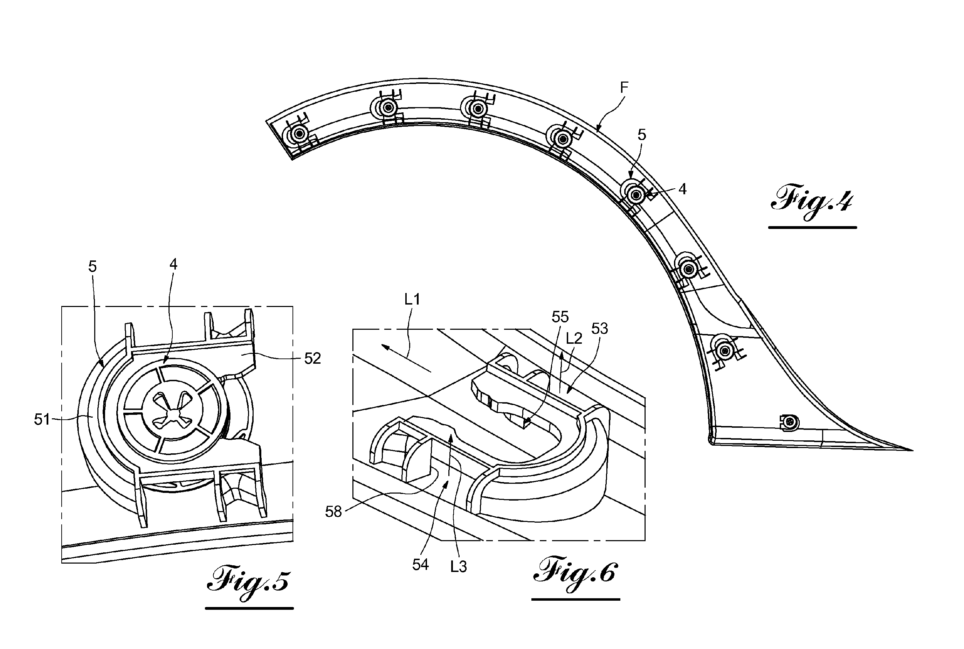

La figure 4 représente la pièce de forme F du côté de sa fixation sur l'élément C. La pièce de forme F est pourvue de sept boîtiers support 5 selon l'invention.

Le boîtier support 5 est représenté en détail sur les figures 5 à 7 respectivement du côté extérieur du boîtier support 5 et du côté intérieur.

Le boîtier 5 est un boîtier ouvert en forme de U avec une zone périphérique 51 par laquelle le boîtier 5 est solidaire de la pièce de forme F. A partir de cette zone périphérique 51 s'étend une paroi plane 52 ouverte sur un côté par lequel est introduite l'agrafe 4. L'agrafe 4 s'engage avec sa partie centrale 41 sur la paroi 52, comme représenté sur la figure 5.

La figure 6 représente le boîtier support 5 seul, c'est-à-dire sans agrafe 4, du côté extérieur. On remarque plus particulièrement à l'intérieur du boîtier 5, à travers deux ouvertures latérales opposées 53, 54 formées dans la paroi du boîtier 5, deux arêtes de positionnement 55 et 58 d'un ensemble de quatre arêtes 55 à 58 destinés à retenir l'agrafe 4 en une position fixe prédéterminée dans le boîtier 5. Les arêtes 55 à 58 sont disposées de part et d'autre des deux ouvertures latérales opposées 53, 54.

Les ouvertures latérales 53, 54 sont obtenues par deux plans de fermeture sensiblement verticales formés dans la partie supérieure du moule. Avantageusement, les deux plans de fermeture dont le déplacement lors de l'ouverture du moule est indiqué sur la figure 6 par deux flèches L2, L3, sont parallèles entre eux.

Les arêtes 55 à 58 sont obtenues par la coopération des deux plans de fermeture avec une languette mobile s'étendant dans un plan horizontal. Avant l'ouverture du moule et le démoulage de la pièce de forme, la languette mobile sort de l'intérieur du boîtier support 5 par un déplacement indiqué sur la figure 6 par la flèche L1. Les deux plans de fermeture sont disposés transversalement par rapport au plan horizontal dans lequel se déplace la languette mobile. Leur déplacement lors de l'ouverture du moule est représenté par des flèches L2 et L3.

Les indications d'orientation telles que « horizontal », « vertical » et « supérieur » se réfèrent aux représentations des pièces concernées sur les dessins.

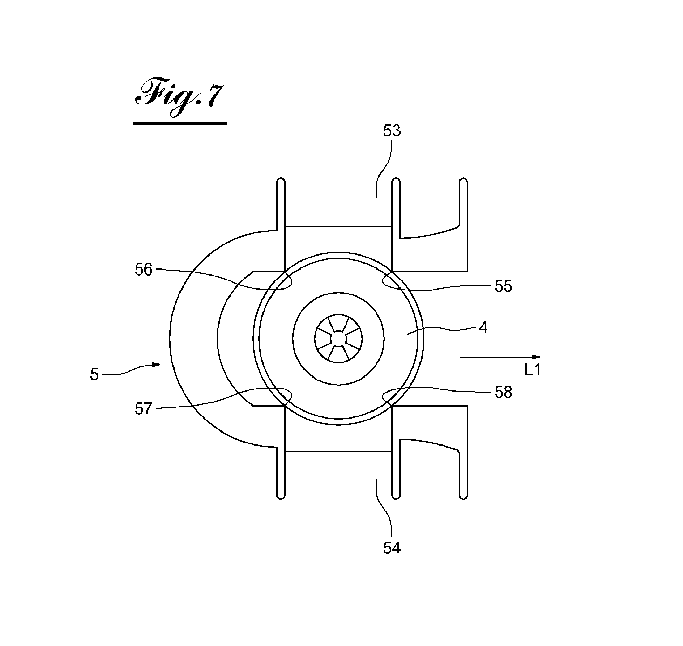

La figure 7 représente le boîtier support 5 du côté intérieur. On y aperçoit clairement les quatre arêtes 55 à 58 obtenues par la coopération des deux ouvertures latérales opposées 53, 54 formées dans la paroi périphérique du boîtier support 5 avec la languette mobile. La flèche L1 indique la direction dans laquelle la languette mobile sort de l'intérieur du boîtier support avant l'ouverture du moule et le démoulage de la pièce de forme.

## Revendications

1. Boîtier support (5) pour des moyens adaptés pour pouvoir fixer une pièce de forme (F) sur la surface d'un élément (C), notamment d'un élément de la carrosserie d'un véhicule, les moyens comprenant une tige de réception (3) adaptée pour être disposée de manière proéminente sur la surface de l'élément (C) et une agrafe (4) adaptée pour pouvoir être placée dans le boîtier support (5) et pour coopérer avec la tige de réception (3),
**caractérisé en ce qu'**il est formé de matière, notamment par injection, avec la pièce de forme (F) et comprend des butées de positionnement obtenues à l'intérieur du boîtier support (5) sous la forme d'arêtes (55 - 58) obtenues par deux ouvertures latérales opposées (53, 54) formées dans la paroi périphérique du boîtier support (5).

2. Pièce de forme réalisée de matière avec au moins un boîtier support (5) selon la revendication 1.

3. Moule pour la réalisation d'un boîtier support (5) selon la revendication 1, **caractérisé en ce qu'**il comprend une languette mobile (L1) disposée de façon à sortir de l'intérieur du boîtier support avant l'ouverture du moule et le démoulage de la pièce de forme, et deux plans de fermeture disposées transversalement par rapport à un plan dans lequel la languette mobile (L1) évolue.

4. Véhicule automobile avec un élément de carrosserie (C) et une pièce de forme (F), **caractérisé en ce que** la pièce de forme (F) comprend un boîtier support selon la revendication 1.
